# EUROPEAN PATENT APPLICATION

(11) **EP 3 770 531 A1**
(43) Date of publication of application: **27.01.2021**
(21) Application number: 20186600.1
(22) Date of filing: 17.07.2020
(51) Int. Cl.: F25B 13/00, F25B 25/00, F25B 40/06

(54) **AIR-CONDITIONING APPARATUS**

(30) Priority: 25.07.2019 JP 2019136931
(71) Applicant: Panasonic Intellectual Property Management Co., Ltd., Osaka-shi, Osaka 540-6207 (JP)
(72) Inventor: MASUDA, Tetsuya, Osaka, 540-6207 (JP); MATSUI, Masaru, Osaka, 540-6207 (JP); HIROTA, Masanobu, Osaka, 540-6207 (JP)
(74) Representative: Eisenführ Speiser

(57) **Abstract**

In an air-conditioning apparatus in which a compressor driven by a gas engine, and a compressor driven by an electric motor are connected in parallel, a highly efficient heating operation is enabled even in a time of a low outside air temperature. A bypass pipe (118) connecting a second compressor suction pipe (114) of a second compressor (102) and a refrigerant pipe (110) is provided, and in the bypass pipe (118), an exhaust heat recovery decompression device (119) and an exhaust heat recovery heat exchanger (120) are provided in order from the refrigerant pipe (110). A cooling water circuit (400) annularly connecting a gas engine (103), the exhaust heat recovery heat exchanger (120) and a radiator (107), and allowing cooling water to circulate, and temperature detecting means (131) detecting a temperature of the cooling water are included. In a start time of a heating operation, a first compressor (101) is driven first, and after the temperature detected by the temperature detecting means (131) rises to a predetermined temperature, the second compressor (102) is driven.

## Description

### BACKGROUND OF THE INVENTION

### Field of the Invention

The present invention relates to an air-conditioning apparatus loaded with a compressor that drives by a gas engine.

### Description of the Related Art

There is proposed an air-conditioning apparatus loaded with a plurality of compressors having different capacities in an outdoor unit, and including a plurality of kinds of driving means provided correspondingly to the respective compressors, and control means causing the plurality of compressors to drive individually or drive in combination, in response to the magnitude of a required load (see Japanese Patent Laid-Open No. 2003-56944, for example).

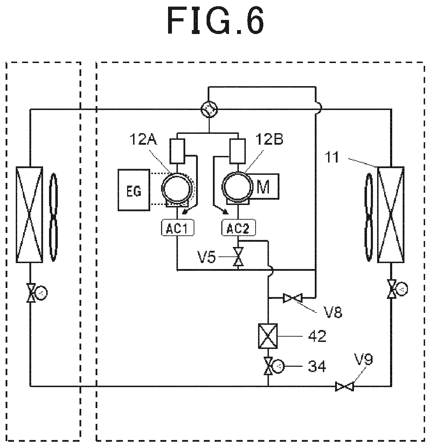

FIG. 6 is an apparatus configuration diagram of Japanese Patent Laid-Open No. 2003-56944, where a compressor 12A and a compressor 12B are connected in parallel in a refrigeration cycle. The apparatus described in Japanese Patent Laid-Open No. 2003-56944 drives the compressor 12A having a large capacity by a gas engine EG, and drives the compressor 12B having a small capacity by an electric motor M.

When the load required of the compressor is small, the compressor 12B having a small capacity is driven by the electric motor M, whereas when the required load is medium, the compressor 12A having a large capacity is driven by the gas engine EG, and when the required load is large, the two large and small compressors are driven simultaneously by the respective kinds of drive means.

In the air-conditioning apparatus that drives one compressor by one gas engine, the engine is selected and adjusted so as to be able to perform an highly efficient operation in response to a medium load that is frequently required, and therefore when a small load is required and a large load is required, the engine has to be operated after the engine speed is removed from the rotational speed range where a highly efficient operation can be performed.

In the art disclosed in Japanese Patent Laid-Open No. 2003-56944, in the case of the load required at the time of a heating operation being a medium/high load, the compressor 12A driven by the gas engine EG, and the compressor 12B driven by the electric motor are simultaneously started, a refrigerant having absorbed heat from outside air in an outdoor heat exchanger 11 is sucked by the compressor 12A driven by the gas engine EG via an accumulator AC1, and a medium-temperature medium-pressure refrigerant having absorbed heat from exhaust heat of the gas engine in an exhaust heat recovery heat exchanger 42 is sucked by the electric-motor driving compressor 12B via an accumulator AC2.

In this configuration, an even more highly efficient operation is enabled by utilizing the exhaust heat of the internal combustion engine that is adopted as the drive means for the compressor with the large capacity, in heating the refrigerant that is sucked by the compressor with the small capacity.

### SUMMARY OF THE INVENTION

In the above described conventional air-conditioning apparatus, in the case of the load required at the time of the heating operation being a medium/high load, the compressor driven by the gas engine and the compressor driven by the electric motor are simultaneously started, the refrigerant having absorbed heat from outside air in the outdoor heat exchanger is sucked by the compressor driven by the gas engine, and the refrigerant having absorbed heat from the exhaust heat of the gas engine in the exhaust heat recovery heat exchanger is sucked by the compressor driven by the electric motor.

However, in the time of the start of the heating operation, the temperatures of the gas engine and the cooling water are low, and exhaust heat sufficient to evaporate the refrigerant sucked by the compressor driven by the electric motor cannot be obtained. Accordingly, there has been a problem in that when the compressor driven by the gas engine and the compressor driven by the electric motor are simultaneously driven at the time of a heating operation, the refrigerant sunk in the exhaust heat recovery heat exchanger is sucked by the compressor driven by the electric motor without being evaporated, and causes a damage to the compressor.

The present invention solves the aforementioned conventional problem, and has an object to cause a refrigerant sucked by a compressor driven by an electric motor to be superheated gas at a time of start of a heating operation, that is, to prevent the compressor from sucking an unevaporated liquid refrigerant, in an air-conditioning apparatus in which a compressor driven by a gas engine and the compressor driven by the electric motor are connected in parallel.

In order to solve the above described conventional problem, an air-conditioning apparatus of the present invention is an air-conditioning apparatus including: an indoor unit including an indoor heat exchanger; an outdoor unit including an outdoor heat exchanger, a first compressor with a gas engine as a driving source, and a second compressor with an electric motor as a driving source, the first compressor and the second compressor being connected in parallel; a refrigerant pipe connecting the indoor heat exchanger and the outdoor heat exchanger, a refrigerant being circulated in the refrigerant pipe for air-conditioning; a bypass pipe connecting the refrigerant pipe and a suction pipe of the second compressor; an exhaust heat recovery decompression device and an exhaust heat recovery heat exchanger provided for the bypass pipe in order from a refrigerant pipe side; a cooling water circuit annularly connecting the gas engine, the exhaust heat recovery heat exchanger, and a radiator, the cooling water circuit being configure to circulate a cooling water; and temperature detecting means detecting a temperature of the cooling water circulating in the cooling water circuit. In the cooling water circuit, the exhaust heat recovery heat exchanger is provided at an upstream side of the radiator, and in a start time of a heating operation, the first compressor is driven first, and after the temperature detected by the temperature detecting means rises to a predetermined temperature, the second compressor is driven.

Since in the cooling water circuit, the exhaust heat recovery heat exchanger is disposed upstream of the radiator, high-temperature cooling water receiving exhaust heat of the gas engine flows into the exhaust heat recovery heat exchanger. Further, in the starting time, the first compressor driven by the gas engine is driven first, and the second compressor driven by the electric motor is driven after the cooling water temperature rises, so that the second compressor sucks the refrigerant having absorbed heat from the cooling water that is increased in temperature in the exhaust heat recovery heat exchanger.

The air-conditioning apparatus of the present invention drives the first compressor driven by the gas engine first in the start time of the heating operation, and starts the second compressor driven by the electric motor after the temperature of the cooling water flowing into the exhaust heat recovery heat exchanger rises to the predetermined temperature, so that the air-conditioning apparatus can cause the refrigerant sucked by the second compressor to be superheated gas, that is, can prevent the second compressor from sucking an unevaporated liquid refrigerant.

### BRIEF DESCRIPTION OF THE DRAWINGS

FIG. 1 is a refrigeration cycle diagram illustrating a configuration of an embodiment of the present invention;
FIG. 2 is a cooling water circuit configuration diagram of the embodiment of the present invention;
FIG. 3 is a graph illustrating an optimal operation ratio according to a magnitude of a load, of a gas-engine driving compressor and an electric-motor driving compressor of an air-conditioning apparatus in the embodiment of the present invention;
FIG. 4 is a Mollier diagram showing refrigeration cycle operating points in the embodiment of the present invention;
FIG. 5 is a cooling water circuit configuration diagram of a modified example of the present invention; and
FIG. 6 is a refrigeration cycle diagram illustrating a conventional air-conditioning apparatus in Japanese Patent Laid-Open No. 2003-56944.

### DETAILED DESCRIPTION OF THE PREFERRED EMBODIMENT

A first invention is an air-conditioning apparatus including an indoor unit including an indoor heat exchanger; an outdoor unit including an outdoor heat exchanger, a first compressor with a gas engine as a driving source, and a second compressor with an electric motor as a driving source, the first compressor and the second compressor being connected in parallel; a refrigerant pipe connecting the indoor heat exchanger and the outdoor heat exchanger, a refrigerant being circulated in the refrigerant pipe for air-conditioning; a bypass pipe connecting the refrigerant pipe and a suction pipe of the second compressor; an exhaust heat recovery decompression device and an exhaust heat recovery heat exchanger provided for the bypass pipe in order from a refrigerant pipe side; a cooling water circuit annularly connecting the gas engine, the exhaust heat recovery heat exchanger, and a radiator, the cooling water circuit being configure to circulate a cooling water; and temperature detecting means detecting a temperature of the cooling water circulating in the cooling water circuit. In the cooling water circuit, the exhaust heat recovery heat exchanger is provided at an upstream side of the radiator, and in a start time of a heating operation, the first compressor is driven first, and after the temperature detected by the temperature detecting means rises to a predetermined temperature, the second compressor is driven.

According to the above, in the cooling water circuit, the exhaust heat recovery heat exchanger is disposed upstream of the radiator, so that the high-temperature cooling water receiving the exhaust heat of the gas engine flows into the exhaust heat recovery heat exchanger. Further, in the start time, the first compressor driven by the gas engine is driven first, and the second compressor driven by the electric motor is driven after the cooling water temperature rises, so that the second compressor sucks the refrigerant having absorbed heat from the cooling water that is increased in temperature in the exhaust heat recovery heat exchanger. Accordingly, the refrigerant sucked by the second compressor can become superheated gas, that is, the second compressor can be prevented from sucking an unevaporated liquid refrigerant.

According to a second invention, in the air-conditioning apparatus of the first invention, the air-conditioning apparatus further includes in the cooling water circuit: a cooling water bypass flow path bypassing a cooling water path between the exhaust heat recovery heat exchanger and the radiator, and a cooling water path between the radiator and the gas engine; and flow path switching means capable of switching cooling water flowing out from the exhaust heat recovery heat exchanger to a radiator side or a cooling water bypass flow path side. In a start time of a heating operation, the flow path switching means switches to the cooling water bypass flow path side when an outside air temperature becomes lower than a predetermined temperature.

According to the above, in the case of the outside air temperature being low at the start time of the heating operation, the cooling water passes through the cooling water bypass flow path without flowing into the radiator, after flowing out of the exhaust heat recovery heat exchanger. Since the cooling water does not pass through the radiator, temperature reduction in the cooling water in the radiator does not occur, and useless reduction in the cooling water temperature is prevented. Accordingly, even when the outside air temperature is low, the second compressor sucks the refrigerant having absorbed heat from the cooling water that is increased in temperature in the exhaust heat recovery heat exchanger and having been superheated gas, that is, the second compressor can be prevented from sucking an unevaporated liquid refrigerant.

Hereinafter, an embodiment of the present invention will be described with reference to the drawings. Note that the present invention is not limited by the embodiment.

### (Embodiment 1)

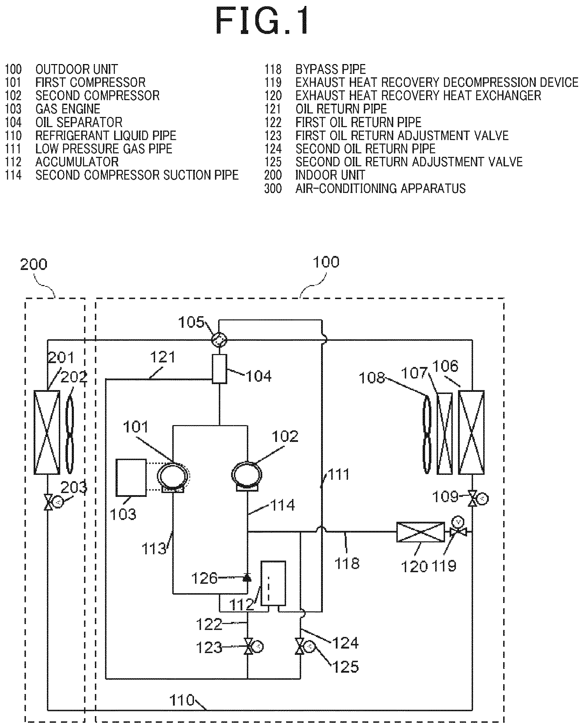

FIG. 1 illustrates a configuration of an air-conditioning apparatus 300 in the embodiment of the present invention.

The air-conditioning apparatus 300 according to the present embodiment includes an outdoor unit 100 and an indoor unit 200. Although only one indoor unit 200 is installed in FIG. 1, a plurality of indoor 200 units may be installed in parallel, with respect to the outdoor unit 100.

The outdoor unit 100 includes a gas engine 103 with gas as a driving source, a first compressor 101 that obtains a driving force from the gas engine 103 to compress a refrigerant, and a second compressor 102 with an electric motor (not illustrated) as a driving source. In the present embodiment, the first compressor 101 having a higher capability than the second compressor 102 is used.

Refrigerant discharge sides of the first compressor 101 and the second compressor 102 join each other and are provided with an oil separator 104. The oil separator 104 separates oil contained in discharged refrigerant gas of the first compressor 101 and the second compressor 102.

An outdoor heat exchanger 106 is connected to downstream of the oil separator 104 via a four-way valve 105. The four-way valve 105 is to switch a refrigeration cycle between cooling and heating. Note that in FIG. 1, at a heating operation time, the refrigerant flows as shown by broken lines in the drawing, and at a cooling operation time, the refrigerant flows as shown by solid lines in the drawing.

A radiator 107 for performing cooling of cooling water of the gas engine 103 is disposed at a leeward side of the outdoor heat exchanger 106. Further, in a vicinity of the radiator 107, an outdoor blower fan 108 for passing outside air through the outdoor heat exchanger 106 and the radiator 107 is disposed.

An outdoor decompression device 109 is provided at one side of the outdoor heat exchanger 106, and the outdoor decompression device 109 is connected to the indoor unit 200 via a refrigerant pipe 110.

The indoor unit 200 includes an indoor heat exchanger 201, an indoor blower fan 202, and an indoor decompression device 203. The refrigerant pipe 110 is connected to one end of the indoor heat exchanger 201 via the indoor decompression device 203. In other words, the refrigerant pipe 110 connects the outdoor heat exchanger 106 and the indoor heat exchanger 201 to each other via the outdoor decompression device 109 and the indoor decompression device 203. This enables the refrigerant discharged from the first compressor 101 and the second compressor 102 to circulate between the outdoor heat exchanger 106 and the indoor heat exchanger 201 through the refrigerant pipe 110. Hereinafter, unless otherwise specified, the refrigerant circulates through the cooling pipe 110.

The other end of the indoor heat exchanger 201 is connected to a low pressure gas pipe 111 via the four-way valve 105, and the low pressure gas pipe 111 is connected to a first compressor suction pipe 113 of the first compressor 101 and a second compressor suction pipe 114 of the second compressor 102 via an accumulator 112.

A bypass pipe 118 that is connected to the second compressor suction pipe 114 is connected to a middle of the refrigerant pipe 110 that connects the outdoor heat exchanger 106 and the indoor heat exchanger 201. In the bypass pipe 118, an exhaust heat recovery decompression device (decompressing means) 119 and an exhaust heat recovery heat exchanger 120 are provided in order from the refrigerant pipe 110. The refrigerant flowing in the exhaust heat recovery heat exchanger 120 is able to absorb heat from engine cooling water in a heating time.

Further, one end of an oil return pipe 121 is connected to a lower part of the oil separator 104, and the other end of the oil return pipe 121 is branched.

A first oil return pipe 122 at one side that is branched from the oil return pipe 121 is connected to the low pressure gas pipe 111 downstream of the accumulator 112 via a first oil return adjustment valve 123.

Further, a second oil return pipe 124 at the other side that is branched from the oil return pipe 121 is connected to the bypass pipe 118 downstream of the exhaust heat recovery heat exchanger 120 via a second oil return adjustment valve 125.

Further, in the second compressor suction pipe 114, a check valve 126 is provided at an upstream side from a connection portion of the bypass pipe 118 with the second compressor suction pipe 114.

Note that the check valve 126 is not necessarily limited to a check valve. For example, the check valve 126 can be any valve that can prevent a medium pressure refrigerant that flows into the second compressor suction pipe 114 via the bypass pipe 118 from flowing into the first compressor suction pipe 113 where a low pressure refrigerant flows, such as an on-off valve, for example.

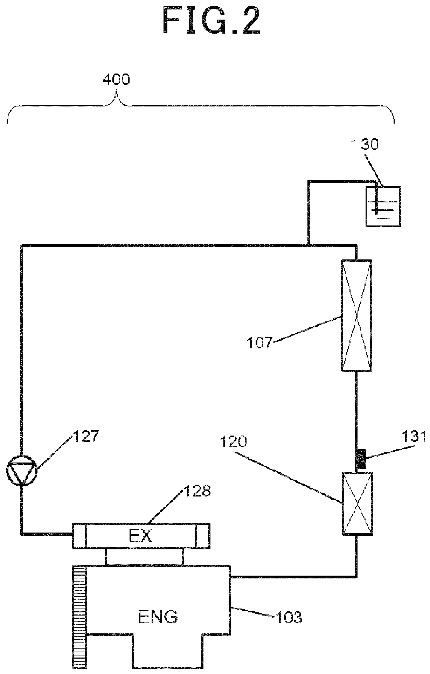

Next, a configuration of a cooling water circuit 400 included in the air-conditioning apparatus 300 in the embodiment of the present invention will be described with reference to FIG. 2.

The cooling water circuit 400 is a flow path that includes a cooling water pump 127, an exhaust gas heat exchanger 128, the gas engine 103, the exhaust heat recovery heat exchanger 120, temperature detecting means 131, the radiator 107 and a reservoir tank 130 and is to cool the gas engine 103 by cooling water circulating in the circuit configured by these components. Note that in the cooling water circuit 400 included in the air-conditioning apparatus 300 of the present invention, the temperature detecting means 131 is provided between the exhaust heat recovery heat exchanger 120 and the radiator 107. Further, the exhaust heat recovery heat exchanger 120 is disposed between the radiator 107 and the gas engine 103. Specifically, the exhaust heat recovery heat exchanger 120 is disposed downstream of the gas engine 103, and upstream of the radiator 107. In the cooling water circuit 400, the gas engine 103, the exhaust heat recovery heat exchanger 120, and the radiator 107 are connected annularly, and the cooling water circulates. The temperature detecting means 131 detects a temperature of the cooling water circulating in the cooling water circuit 400. The cooling water pump 127 is provided to circulate the cooling water of the gas engine 103 in the circuit. The reservoir tank 130 is used to temporarily store surplus of cooling water and to replenish cooling water when the cooling water becomes insufficient. The radiator 107 is disposed at the leeward side of the outdoor heat exchanger 106, and radiates heat of the cooling water by the outdoor blower fan 108.

Next, an operation of the air-conditioning apparatus 300 of the present embodiment will be described.

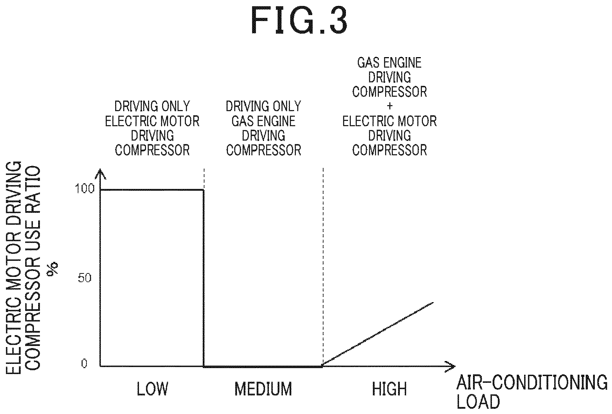

FIG. 3 is a diagram illustrating a relationship of a use ratio of the first compressor 101 and the second compressor 102 to an air-conditioning load.

As illustrated in FIG. 3, the trial calculation result and the actual machine evaluation result of the inventors reveal that in the air-conditioning apparatus 300 of the present embodiment, a highest energy efficiency is obtained by driving only the second compressor 102 driven by the electric motor when the air-conditioning load is small, driving only the first compressor 101 driven by the gas engine 103 when the air-conditioning load is medium, and by driving the first compressor 101 driven by the gas engine 103 with maximum output and making up for insufficiency with the second compressor 102 driven by the electric motor when the air-conditioning load is high.

In the air-conditioning apparatus 300 of the present embodiment, in a case of the air-conditioning load being high in the heating operation, a gas refrigerant with low temperature and low pressure that has absorbed heat from air (outside air) is compressed to a high temperature and high pressure by the first compressor 101 driven by the gas engine 103, and a gas refrigerant with medium temperature and medium pressure that has absorbed heat from the exhaust heat of the gas engine 103 is compressed to the high temperature and high pressure by the second compressor 102 driven by the electric motor.

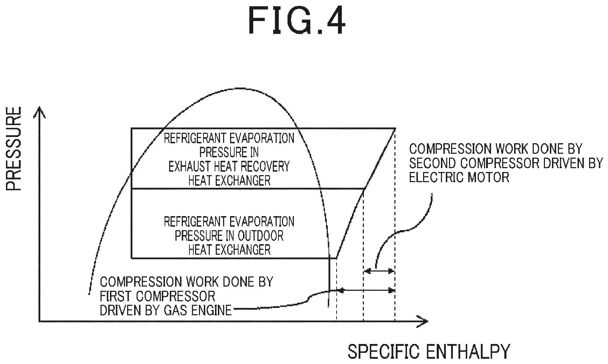

FIG. 4 is a Mollier diagram illustrating refrigeration cycle operating points of the present embodiment.

As illustrated in FIG. 4, it is found that in the present embodiment, suction pressure of the second compressor 102 driven by the electric motor is higher than suction pressure of the first compressor 101 driven by the gas engine 103, and a compression ratio (high pressure/low pressure) of the second compressor 102 driven by the electric motor is low, so that energy consumed by the second compressor 102 driven by the electric motor can be decreased.

Next, operations of the air-conditioning apparatus 300 and the cooling water circuit 400 of the present embodiment will be described by being divided into magnitudes of required loads in the cooling operation, heating operation and respective operation states, with reference to FIG. 1 and FIG. 2.

### (Cooling operation low load time)

In a low load time of the cooling operation, only the second compressor 102 with the electric motor as the driving source is driven. The exhaust heat recovery decompression device 119 is closed. The four-way valve 105 is set to flow the refrigerant as shown by the solid lines.

The refrigerant with high temperature and high pressure compressed by the second compressor 102 flows into the oil separator 104. The gas refrigerant with high purity from which oil is separated in the oil separator 104 passes through the four-way valve 105 and enters the outdoor heat exchanger 106. The gas refrigerant condenses after exchanging heat with outside air and radiating heat in the outdoor heat exchanger 106, becomes a liquid refrigerant with high pressure, passes through the outdoor decompression device 109, and is supplied to the indoor unit 200.

The high-pressure liquid refrigerant entering the indoor unit 200 is decompressed in the indoor decompression device 203 to be in a gas-liquid two-phase state, and flows into the indoor heat exchanger 201. The refrigerant in the gas-liquid two-phase state evaporates after exchanging heat with air in a space to be air-conditioned and absorbing heat in the indoor heat exchanger 201, becomes a gas refrigerant, and flows out from the indoor unit 200.

The gas refrigerant flowing out from the indoor unit 200 returns to the outdoor unit 100 again. The gas refrigerant flowing into the outdoor unit 100 passes through the four-way valve 105, and the accumulator 112, returns to the second compressor 102, and repeats the aforementioned process.

Further, in the oil return pipe 121, the first oil return adjustment valve 123 is opened, and the second oil return adjustment valve 125 is closed. Lubricating oil separated in the oil separator 104 is returned to the low pressure gas pipe 111 through the oil return pipe 121 and the first oil return pipe 122, passes through the second compressor suction pipe 114, returns to the second compressor 102, and repeats the aforementioned process.

In the low load time of the cooling operation, the first compressor 101 with the gas engine 103 as the driving source is not driven, so that the cooling water pump 127 stops, and the cooling water circuit 400 does not operate.

### (Cooling operation medium load time)

In a medium load time of the cooling operation, the first compressor 101 with the gas engine 103 as the driving source is driven. The exhaust heat recovery decompression device 119 is closed. The four-way valve 105 is set to flow the refrigerant as shown by the solid line.

The refrigerant with high temperature and high pressure that is compressed by the first compressor 101 flows into the oil separator 104. The gas refrigerant with high purity from which oil is separated in the oil separator 104 passes through the four-way valve 105, and enters the outdoor heat exchanger 106. The gas refrigerant condenses after exchanging heat with outside air and radiating heat in the outdoor heat exchanger 106, becomes the liquid refrigerant with high pressure to pass through the outdoor decompression device 109, and is supplied to the indoor unit 200.

The liquid refrigerant with high pressure entering the indoor unit 200 is decompressed in the indoor decompression device 203 to be in a gas-liquid two-phase state, and flows into the indoor heat exchanger 201. The refrigerant in the gas-liquid two-phase state evaporates after exchanging heat with air in a space to be air-conditioned and absorbing heat in the indoor heat exchanger 201, becomes the gas refrigerant, and flows out from the indoor unit 200.

The gas refrigerant flowing out from the indoor unit 200 returns to the outdoor unit 100 again. The gas refrigerant flowing into the outdoor unit 100 passes through the four-way valve 105 and the accumulator 112, returns to the first compressor 101, and repeats the aforementioned process.

Further, in the oil return pipe 121, the first oil return adjustment valve 123 is opened, and the second oil return adjustment valve 125 is closed. Lubricating oil separated in the oil separator 104 is returned to the low pressure gas pipe 111 through the oil return pipe 121 and the first oil return pipe 122, passes through the first compressor suction pipe 113, returns to the first compressor 101, and repeats the aforementioned process.

The exhaust heat generated in the gas engine 103 is carried to the radiator 107 by the engine cooling water described later and the pump, exchanges heat with outside air to radiate heat, and returns to the gas engine 103 again.

### (Cooling high load time)

In a high load time of the cooling operation, both the first compressor 101 with the gas engine 103 as the driving source and the second compressor 102 with the electric motor as the driving source are driven. The exhaust heat recovery decompression device 119 is closed. The four-way valve 105 is set to flow the refrigerant as shown by the solid lines.

The refrigerant with high temperature and high pressure that is compressed by the first compressor 101 and the second compressor 102 flows into the oil separator 104. The refrigerant flowing into the oil separator 104 becomes a gas refrigerant with high purity from which oil is separated, passes through the four-way valve 105, and enters the outdoor heat exchanger 106. The gas refrigerant condenses after exchanging heat with outside air and radiates heat in the outdoor heat exchanger 106, becomes a liquid refrigerant with high pressure to pass through the outdoor decompression device 109, and is supplied to the indoor unit 200.

The liquid refrigerant with high pressure entering the indoor unit 200 is decompressed in the indoor decompression device 203 to be in a gas-liquid two-phase state, and flows into the indoor heat exchanger 201. The refrigerant in the gas-liquid two-phase state evaporates after exchanging heat with air in a space to be air-conditioned and absorbing heat, becomes a gas refrigerant, and flows out from the indoor unit 200.

The gas refrigerant flowing out from the indoor unit 200 returns to the outdoor unit 100 again. The gas refrigerant flowing into the outdoor unit 100 is branched after passing through the four-way valve 105 and the accumulator 112, returns to the first compressor 101 through the first compressor suction pipe 113, returns to the second compressor 102 through the second compressor suction pipe 114, and repeats the aforementioned process.

Further, in the oil return pipe 121, the first oil return adjustment valve 123 is opened, and the second oil return adjustment valve 125 is closed. Lubricating oil separated in the oil separator 104 is returned to the low pressure gas pipe 111 through the oil return pipe 121 and the first oil return pipe 122, returns to the first compressor 101 through the first compressor suction pipe 113, returns to the second compressor 102 through the second compressor suction pipe 114, and repeats the aforementioned process.

In the cooling high load time, the exhaust heat generated in the gas engine 103 is also carried to the radiator 107 by the engine cooling water described later and the pump, exchanges heat with outside air to radiate heat, and returns to the gas engine 103 again.

In the medium load time and the high load time in which the first compressor 101 with the gas engine 103 as the driving source is driven in the cooling operation, the cooling water pump 127 for circulating the cooling water drives to cool the gas engine 103. The cooling water that is pumped out by the cooling water pump 127 first flows into the exhaust gas heat exchanger 128, and cools the exhaust gas of the gas engine 103. The exhaust gas cooled in the exhaust gas heat exchanger 128 is released to outside air from an exhaust gas muffler not illustrated. The cooling water passing through the exhaust gas heat exchanger 128 subsequently flows into the gas engine 103, and cools the gas engine 103. Then, the cooling water cooling the gas engine 103 flows into the exhaust heat recovery heat exchanger 120. The cooling water flowing into the exhaust heat recovery heat exchanger 120 radiates heat to the refrigerant with high pressure flowing into the exhaust heat recovery heat exchanger 120 through the bypass pipe 118, and is cooled. In other words, the refrigerant absorbs the heat of the cooling water. Thereafter, the cooling water flows to the radiator 107 from the exhaust heat recovery heat exchanger 120. The cooling water flowing into the radiator 107 is cooled by introduced outside air in the outdoor unit 100, returns to the cooling water pump 127 again, and repeats the aforementioned process. The temperature detecting means 131 is provided in the flow path between the exhaust heat recovery heat exchanger 120 and the radiator 107, and detects a temperature of the cooling water flowing in the flow path. Note that an outdoor unit control section not illustrated monitors a cooling water outlet temperature of the gas engine 103, and controls a rotational speed of the cooling water pump 127 so that the cooling water outlet temperature is substantially constant.

### (Heating low load time)

In a low load time of the heating operation, only the second compressor 102 with the electric motor as the driving source is driven. The exhaust heat recovery decompression device 119 is closed. The four-way valve 105 is set to flow the refrigerant as shown by the broken lines.

The refrigerant with high temperature and high pressure compressed in the second compressor 102 flows into the oil separator 104. The gas refrigerant with high purity from which oil is separated in the oil separator 104 is supplied to the indoor unit 200 through the four-way valve 105.

The gas refrigerant with high temperature and high pressure entering the indoor unit 200 flows into the indoor heat exchanger 201, condenses after exchanging heat with air in the space to be air-conditioned and radiating heat, becomes a liquid refrigerant, and flows out from the indoor unit 200 through the indoor decompression device 203.

The liquid refrigerant flowing out from the indoor unit 200 returns to the outdoor unit 100 again. The liquid refrigerant flowing into the outdoor unit 100 is decompressed in the outdoor decompression device 109 to be in a gas-liquid two-phase state, and flows into the outdoor heat exchanger 106. The refrigerant in the gas-liquid two-phase state evaporates after exchanging heat with outside air and absorbing heat in the outdoor heat exchanger 106, becomes a gas refrigerant, passes through the four-way valve 105 and the accumulator 112, returns to the second compressor 102, and repeats the aforementioned process.

Further, in the oil return pipe 121, the first oil return adjustment valve 123 is opened, and the second oil return adjustment valve 125 is closed. The lubricating oil separated in the oil separator 104 is returned to the low pressure gas pipe 111 through the oil return pipe 121 and the first oil return pipe 122, passes through the second compressor suction pipe 114, returns to the second compressor 102, and repeats the aforementioned process.

In the heating operation low load time, the first compressor 101 with the gas engine 103 as the driving source does not drive, so that the cooling water pump 127 stops, and the cooling water circuit 400 does not operate.

### (Heating medium load time)

In a medium load time of the heating operation, the first compressor 101 with the gas engine 103 as the driving source is driven. The exhaust heat recovery decompression device 119 is closed. The four-way valve 105 is set to flow the refrigerant as shown by the broken lines.

The refrigerant with high temperature and high pressure compressed by the first compressor 101 flows into the oil separator 104. The gas refrigerant with high purity from which oil is separated in the oil separator 104 passes through the four-way valve 105 and is supplied to the indoor unit 200.

The gas refrigerant with high temperature and high pressure entering the indoor unit 200 flows into the indoor heat exchanger 201, condenses after exchanging heat with air in the space to be air-conditioned and radiating the heat, becomes a liquid refrigerant, and flows out from the indoor unit 200 through the indoor decompression device 203.

The liquid refrigerant flowing out from the indoor unit 200 returns to the outdoor unit 100 again. The liquid refrigerant flowing into the outdoor unit 100 is decompressed in the outdoor decompression device 109 to be in a gas-liquid two-phase state and flows into the outdoor heat exchanger 106. The refrigerant in the gas-liquid two-phase state evaporates after exchanging heat with outside air and absorbing heat, and becomes a gas refrigerant. Thereafter, the gas refrigerant passes through the four-way valve 105 and the accumulator 112, returns to the first compressor 101, and repeats the aforementioned process.

Further, in the oil return pipe 121, the first oil return adjustment valve 123 is opened, and the second oil return adjustment valve 125 is closed. The lubricating oil separated in the oil separator 104 is returned to the low pressure gas pipe 111 through the oil return pipe 121 and the first oil return pipe 122, passes through the first compressor suction pipe 113, returns to the first compressor 101, and repeats the aforementioned process.

The exhaust heat generated in the gas engine 103 is carried to the radiator 107 by the engine cooling water described later and the pump, exchanges heat with outside air and radiates heat, and returns to the gas engine 103 again.

In the medium load time in which the gas engine 103 drives in the heating operation, the cooling water pump 127 for cooling the gas engine 103 drives. The cooling water that is pumped out by the cooling water pump 127 first flows into the exhaust gas heat exchanger 128, and cools the exhaust gas of the gas engine 103. The exhaust gas cooled by the exhaust gas heat exchanger 128 is released to outside air from the exhaust gas muffler not illustrated. Next, the cooling water passing through the exhaust gas heat exchanger 128 flows into the gas engine 103, and cools the gas engine 103. Then, the cooling water cooling the gas engine 103 flows into the exhaust heat recovery heat exchanger 120. The cooling water flowing into the exhaust heat recovery heat exchanger 120 radiates heat to the refrigerant flowing into the exhaust heat recovery heat exchanger 120 through the bypass pipe 118, and is cooled. In other words, the refrigerant flowing in the exhaust heat recovery heat exchanger 120 absorbs heat from the cooling water with high temperature. Thereafter, the cooling water flows to the radiator 107 from the exhaust heat recovery heat exchanger 120. The cooling water flowing into the radiator 107 is cooled by the introduced outside air in the outdoor unit 100, returns to the cooling water pump 127 again, and repeats the aforementioned process. The temperature detecting means 131 is provided in the flow path between the exhaust heat recovery heat exchanger 120 and the radiator 107, and detects the temperature of the cooling water flowing in the flow path. Note that the outdoor unit control section not illustrated monitors the cooling water outlet temperature of the gas engine 103, and controls the rotational speed of the cooling water pump 127 so that the cooling water outlet temperature is substantially constant.

In this way, in the cooling water circuit, the exhaust heat recovery heat exchanger 120 is disposed downstream of the gas engine 103. Further, the exhaust heat recovery heat exchanger 120 is disposed upstream of the radiator 107, and therefore the cooling water with high temperature receiving the exhaust heat of the gas engine 103 flows into the exhaust heat recovery heat exchanger 120.

### (Heating high load and low outside air temperature time)

In the high load and low outside air temperature time of the heating operation, the first compressor 101 with the gas engine 103 as the driving source, and the second compressor 102 as the electric motor as the driving source are driven. The exhaust heat recovery decompression device 119 is opened. The four-way valve 105 is set to flow the refrigerant as shown by the broken lines. Here, in a start time of the heating operation, the first compressor 101 is driven first, and after the temperature detected by the temperature detecting means 131 rises to a predetermined temperature, the second compressor 102 is driven.

The refrigerant with high temperature and high pressure compressed by the first compressor 101 and the second compressor 102 flows into the oil separator 104. The refrigerant flowing into the oil separator 104 becomes a gas refrigerant with high purity from which oil is separated, passes through the four-way valve 105, and is supplied to the indoor unit 200.

The gas refrigerant with high temperature and high pressure entering the indoor unit 200 flows into the indoor heat exchanger 201, condenses after exchanging heat with air in the space to be air-conditioned and radiating heat, becomes a liquid refrigerant, passes through the indoor decompression device 203 and flows out from the indoor unit 200.

The liquid refrigerant flowing out from the indoor unit 200 returns to the outdoor unit 100 again. A part of the liquid refrigerant flowing into the outdoor unit 100 flows into the bypass pipe 118. The remaining liquid refrigerant that does not flow into the bypass pipe 118 is decompressed in the outdoor decompression device 109 to be in a gas-liquid two-phase state, and flows into the outdoor heat exchanger 106.

The liquid refrigerant flowing into the bypass pipe 118 is decompressed in the exhaust heat recovery decompression device 119 to be in a gas-liquid two-phase state, and flows into the exhaust heat recovery heat exchanger 120. The refrigerant in the gas-liquid two-phase state flowing into the exhaust heat recovery heat exchanger 120 evaporates after absorbing heat from the engine cooling water described later, and becomes a gas refrigerant with medium temperature and medium pressure.

The gas refrigerant with medium temperature and medium pressure passes through the bypass pipe 118, and returns to the second compressor 102. Here, since the check valve 126 is provided in the second compressor suction pipe 114 of the second compressor 102, the gas refrigerant with medium temperature and medium pressure is not sucked by the first compressor 101.

Accordingly, the gas refrigerant with low temperature and low pressure evaporated in the outdoor heat exchanger 106 returns to the first compressor 101, and is compressed to a gas refrigerant with high temperature and high pressure, whereas the gas refrigerant with medium temperature and medium pressure evaporated in the exhaust heat recovery heat exchanger 120 returns to the second compressor 102, and is compressed to a gas refrigerant with high temperature and high pressure to repeat the aforementioned process.

Further, in the oil return pipe 121, the first oil return adjustment valve 123, and the second oil return adjustment valve 125 are both opened. The lubricating oil separated in the oil separator 104 passes through the oil return pipe 121, a part of the lubricating oil is returned to the low pressure gas pipe 111 through the first oil return adjustment valve 123 and the first oil return pipe 122, and is sucked by the first compressor 101. The remaining lubricating oil is returned to the bypass pipe 118 through the second oil return adjustment valve 125 and the second oil return pipe 124, passes through the second compressor suction pipe 114, is sucked by the second compressor 102, and repeats the aforementioned process.

In the time of a high load and low outside air temperature in which the gas engine 103 drives in the heating operation, the cooling water pump 127 for cooling the gas engine 103 drives. The cooling water that is pumped out by the cooling water pump 127 flows into the exhaust gas heat exchanger 128 first, and cools the exhaust gas of the gas engine 103. The exhaust gas cooled by the exhaust gas heat exchanger 128 is released to outside air from the exhaust gas muffler not illustrated. Next, the cooling water passing through the exhaust gas heat exchanger 128 flows into the gas engine 103, and cools the gas engine 103. Then, the cooling water cooling the gas engine 103 flows into the exhaust heat recovery heat exchanger 120. The cooling water flowing into the exhaust heat recovery heat exchanger 120 radiates heat to the refrigerant with medium temperature and medium pressure flowing into the exhaust heat recovery heat exchanger 120 through the bypass pipe 118 and is cooled. In other words, the refrigerant flowing in the exhaust heat recovery heat exchanger 120 absorbs heat from the cooling water with high temperature. Thereafter, the cooling water flows from the exhaust heat recovery heat exchanger 120 to the radiator 107. The cooling water flowing into the radiator 107 is cooled by the introduced outside air in the outdoor unit 100, returns to the cooling water pump 127 again, and repeats the aforementioned process. The temperature detecting means 131 is provided in the flow path between the exhaust heat recovery heat exchanger 120 and the radiator 107, and detects the temperature of the cooling water flowing in the flow path. Note that the outdoor unit control section not illustrated monitors the cooling water outlet temperature of the gas engine 103, and controls the rotational speed of the cooling water pump 127 so that the cooling water outlet temperature is substantially constant.

In this way, in the cooling water circuit, the exhaust heat recovery heat exchanger 120 is disposed downstream of the gas engine 103. Further, since the exhaust heat recovery heat exchanger 120 is disposed upstream of the radiator 107, the cooling water with high temperature receiving the exhaust heat of the gas engine 103 flows into the exhaust heat recovery heat exchanger 120. At the time of start of the heating operation, the first compressor 101 that drives by the gas engine 103 is driven first, and the second compressor 102 that drives by the electric motor is driven after the cooling water temperature rises, so that the second compressor 102 can suck the refrigerant having absorbed heat from the cooling water that is increased in temperature in the exhaust heat recovery heat exchanger 120.

As illustrated in FIG. 3, the trial calculation result and the actual machine evaluation result of the inventors reveal that in the aforementioned air-conditioning apparatus 300, a highest energy efficiency is obtained by driving only the second compressor 102 driven by the electric motor when the air-conditioning load is small, by driving only the first compressor 101 driven by the gas engine when the air-conditioning load is medium, and by driving the first compressor 101 driven by the gas engine 103 with maximum output and making up for insufficiency with the second compressor 102 driven by the electric motor when the air-conditioning load is high.

As above, in the present embodiment, in the heating operation time, the gas refrigerant evaporated in the outdoor heat exchanger is sucked by the first compressor, whereas the gas refrigerant evaporated in the exhaust heat recovery heat exchanger is sucked by the second compressor, whereby the refrigerant evaporated in the outdoor heat exchanger and the refrigerant evaporated in the exhaust heat recovery heat exchanger are sucked by the separate compressors without joining each other.

Specifically, when the required load is large in the heating operation, and the compressor driven by the gas engine and the compressor driven by the electric motor are used in combination, the exhaust heat of the gas engine can be used as the absorption heat source of the refrigerant sucked by the compressor driven by the electric motor.

Further, in the present embodiment, in the start time of the heating operation, the first compressor is driven first, and the second compressor is driven after the temperature detected by the temperature detecting means rises to the predetermined temperature. Thereby, the second compressor driven by the electric motor is started after the temperature of the cooling water flowing into the exhaust heat recovery heat exchanger rises to the predetermined temperature, so that the refrigerant to be sucked by the second compressor can become superheated gas, that is, the second compressor can be prevented from sucking an unevaporated liquid refrigerant.

### (Modified Example)

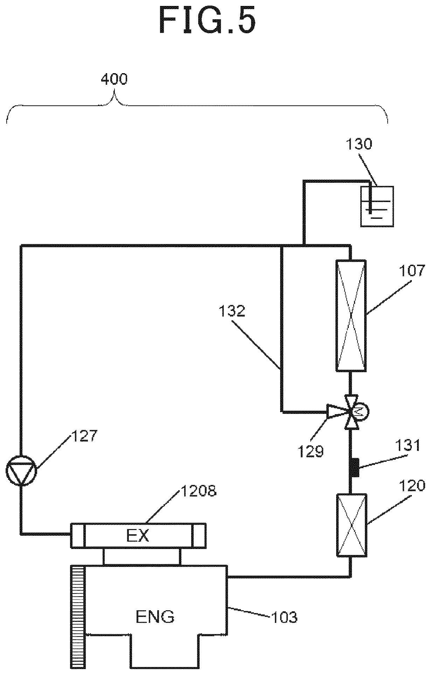

FIG. 5 illustrates a modified example of the cooling water circuit 400 of embodiment 1 of the present invention illustrated in FIG. 2. As a difference from FIG. 2, in FIG. 5, flow path switching means 129 is provided between an exhaust heat recovery heat exchanger 120 and a radiator 107. Further, a cooling water bypass flow path 132 connecting a flow path between the radiator 107 and a cooling water pump 127 and the flow path switching means 129 is provided. The flow path switching means 129 is a three-way valve, for example, and switches cooling water flowing from the exhaust heat recovery heat exchanger 120 to either a radiator 107 side or a cooling water bypass flow path 132 side.

The flow path switching means 129 switches the cooling water so that the cooling water flows to the cooling water bypass flow path 132 side, when the outside temperature becomes lower than a predetermined temperature set in advance, in a start time of a heating operation. The outside air temperature is detected by outside air temperature detecting means not illustrated. The outside air temperature detecting means may be an outside air temperature sensor, for example, or may be estimating means that estimates the outside air temperature from other data.

Accordingly, when the outside air temperature is low at the time of start of the heating operation, the cooling water flows out of the exhaust heat recovery heat exchanger 120, and thereafter passes through the cooling water bypass flow path 132 without flowing into the radiator 107. Since the cooling water does not pass through the radiator 107, temperature reduction of the cooling water in the radiator 107 does not occur, and useless reduction in the cooling water temperature is prevented. Accordingly, even when the outside air temperature is low, the second compressor 102 can suck the refrigerant having absorbed heat from the cooling water that is increased in temperature in the exhaust heat recovery heat exchanger 120 and having been superheated gas, that is, the second compressor 102 can be prevented from sucking an unevaporated liquid refrigerant.

By the above effect, according to the present invention, the air-conditioning apparatus with a high capability and high efficiency can be provided even when the required air-conditioning load is high in the heating operation.

The air-conditioning apparatus according to the present invention selects the driving sources of the compressors in response to the air-conditioning load, and thereby can be favorably used as the air-conditioner that can perform a highly efficient operation regardless of the air-conditioning load.

### Reference Sings List

- 100: Outdoor unit
- 101: First compressor
- 102: Second compressor
- 103: Gas engine
- 104: Oil separator
- 110: Refrigerant pipe
- 111: Low pressure gas pipe
- 112: Accumulator
- 114: Second compressor suction pipe
- 118: Bypass pipe
- 119: Exhaust heat recovery decompression device
- 120: Exhaust heat recovery heat exchanger
- 121: Oil return pipe
- 122: First oil return pipe
- 123: First oil return adjustment valve
- 124: Second oil return pipe
- 125: Second oil return adjustment valve
- 129: Flow path switching means
- 131: Temperature detecting means
- 132: Cooling water bypass flow path
- 200: Indoor unit
- 300: Air-conditioning apparatus

## Claims

1. An air-conditioning apparatus comprising:
an indoor unit (200) including an indoor heat exchanger (201);
an outdoor unit (100) including an outdoor heat exchanger (106), a first compressor (101) with a gas engine (103) as a driving source, and a second compressor (102) with an electric motor as a driving source, the first compressor and the second compressor being connected in parallel; and
a refrigerant pipe (110) connecting the indoor heat exchanger and the outdoor heat exchanger, a refrigerant being circulated in the refrigerant pipe for air-conditioning,
the air-conditioning apparatus **characterized by** comprising:
a bypass pipe (118) connecting the refrigerant pipe and a suction pipe (114) of the second compressor;
an exhaust heat recovery decompression device (119) and an exhaust heat recovery heat exchanger (120) provided for the bypass pipe in order from a refrigerant pipe side;
a cooling water circuit (400) annularly connecting the gas engine, the exhaust heat recovery heat exchanger, and a radiator (107), the cooling water circuit being configure to circulate a cooling water; and
temperature detecting means (131) detecting a temperature of the cooling water circulating in the cooling water circuit, wherein
in the cooling water circuit, the exhaust heat recovery heat exchanger is provided at an upstream side of the radiator, and
in a start time of a heating operation, the first compressor is driven first, and after the temperature detected by the temperature detecting means rises to a predetermined temperature, the second compressor is driven.

2. The air-conditioning apparatus according to claim 1, further comprising in the cooling water circuit:
a cooling water bypass flow path (132) bypassing a cooling water path between the exhaust heat recovery heat exchanger and the radiator, and a cooling water path between the radiator and the gas engine; and
flow path switching means (129) capable of switching cooling water flowing out from the exhaust heat recovery heat exchanger to a radiator side or a cooling water bypass flow path side, wherein
in a start time of a heating operation, the flow path switching means switches to the cooling water bypass flow path side when an outside air temperature becomes lower than a predetermined temperature.
